# EUROPEAN PATENT APPLICATION

(11) **EP 2 386 903 A1**
(43) Date of publication of application: **16.11.2011**
(21) Application number: 09837308.7
(22) Date of filing: 05.08.2009
(51) Int. Cl.: G03B 35/02, H04N 13/00

(54) **STEREO PHOTOGRAPHIC APPARATUS AND METHOD**

(30) Priority: 07.01.2009 CN 200910104854
(71) Applicant: Inlife-handnet Co., Ltd., Nanshan District Shenzhen City Guangdong 518000 (CN)
(72) Inventor: TAN, Jianmin, Guangdong 518000 (CN)
(74) Representative: Acco, Stefania
(86) International application number: PCT/CN2009/073090
(87) International publication number: WO 2010/078750

(57) **Abstract**

A stereo imaging apparatus comprises two groups of optical imaging lens (111,112), two liquid crystal optical valves (116, 117), a first plane reflector (114), a second plane reflector (115), a third reflector (113), a single image sensor (120), an image process circuit (130), and an optical valve synchronization drive module (140). The two groups of optical imaging lens (111, 112) simulate eyes to receive outside light. The first and the second plane reflector (114,115) reflect the light from the first and the second groups of optical imaging lens (111,112) respectively. The third reflector (113) is placed between the first and the second plane reflector (114,115) to reflect the light reflected by the first and the second plane reflectors (114,115). The image sensor (120) receives the light reflected the light reflected by the third reflector (113) on its imaging plane to form images. The image process circuit (130) controls the optical valve synchronization drive module (140) and processes the image signals from the image sensor (120) to form stereo image signals. Also, a stereo imaging method is provided. By employing the apparatus and method for stereoscopic imaging, a stereoscopic image with good imaging effect can be obtained with low cost.

## Description

### FIELD OF THE INVENTION

The present invention relates to technical field of stereoscopic imaging and processing, and more specifically relates to an apparatus and a method for stereoscopic imaging.

### BACKGROUND OF THE INVENTION

Stereoscopic imaging technology and stereoscopic imaging product can be applied in apparatus such as cellphone, camera, MP4, glasses-like display apparatus, reality simulating apparatus and remote control robot. Besides, they can play a major role in fields such as civilian, military, research and games.

Human eyes can produce stereoscopic feelings to the seen objects based on the visual differences between left and right eyes. Thus, common stereoscopic imaging apparatus all use dual camera lens to image the object and then process the images. However, it may bring outstanding issues mainly as follows. 1, the dual lens have inconsistent focusing performances which results in different definitions of left and right video, and finally results in blur images. 2, the installation of dual lens cannot guarantee the consistent counterpoint of the images such that the consistency of the level and tilt of the image can not be guaranteed in visual angle, then there may be deviation when the two images are three-dimensionally superposed and as a result, there will be fuzzy ghost on the image. 3, the inconsistency of dual image sensors may lead to the inconsistencies of the characteristics of the image such as brightness, contrast, chroma and grayscale, and there may be evident visual difference between the left and right images, which may produce visual dizziness, blurred images and so on when the images are three-dimensionally superposed. 4, the image is acquired in the order of left and right, so it is difficult to ensure the definition of the screen when using recovering method of displaying left and right in turns. Meanwhile, applying the common image sensor to the maximum extend may obtain stereo image with high definition while the color enjoys no loss. Therefore, a stereo imaging apparatus and stereo imaging method is needed, which uses precise optical imaging structure to ensure the consistency along the optical path, and uses a single image sensor to accept the images in two paths to ensure the complete consistency in the electronic performances of the images.

### SUMMARY OF THE INVENTION

The objective of the present invention is to provide a stereo imaging apparatus and a stereo imaging method, preferring to the defect of the prior art such as inconsistency in brightness, contrast, color and grayscale of the images which may result from the blur images and the inconsistency upon the usage of dual image sensors.

An apparatus and a method for stereoscopic imaging, substantially as shown in and/or described in connection with at least on of the figures, as set forth more completely in the claims, aiming at the technical problems of the prior art such as blur images, inconsistency upon the usage of dual image sensors, and the inconsistency in brightness, contrast, color, grayscale and synchronization of the images resulting from the differences in synchronization performance.

According to an aspect, a stereoscopic imaging apparatus is provided, which comprising:
a first group of optical imaging lenses and a second group of optical imaging lenses, operable to simulate eyes to receive outside light respectively;
a first liquid crystal optical valve located on the top of the first group of optical imaging lenses and a second liquid crystal optical valve located on the top of the second group of optical imaging lenses;
an optical valve synchronization drive module operable to control the first and the second liquid crystal optical valves to be open and closed in turns between left and right;
a first plane reflector, a second plane reflector and a third reflector, the first plane reflector and the second plane reflector are operable conduct a first reflection of the light from the first group of optical imaging lenses and the second group of optical imaging lenses, the third reflector is located between the first and second flat reflectors and is operable to conduct a second reflection of the light from the first reflection;
a single image sensor operable to receive the light from the second reflection on its imaging plane and to form images;
an image process circuit coupled to the optical valve synchronization drive module, operable to control the optical valve synchronization drive module, as well as receive image signals from the image sensor and process the received image signals to form stereo image signals.

Advantageously, lateral distance between the first and the second group of optical imaging lenses ranges from 40mm to 100mm.

Advantageously, the third reflector is a reflector having two sides arranged with a certain angle.

Advantageously, the single image sensor is a CCD/CMOS image sensor.

Advantageously, the image process circuit is operable to control the optical valve synchronization drive module to drive the first and the second liquid crystal optical valves to be closed and open in turns between left and right in a way of frame synchronization or field synchronization.

According to the present invention, to achieve the objective better, a stereo imaging method is provided, the method comprising:
S1, installing two groups of optical imaging lenses and two liquid crystal optical valves laterally and parallelly to simulate eyes to receive outside light, wherein the two liquid crystal valves are closed and open in turns between left and right;
S2, reflecting the outside light received by two groups of optical imaging lenses through two plane reflectors, and reflecting the light reflected by two plane reflectors through a third reflector placed between the two plane reflectors;
S3, utilizing a single image sensor to receive the reflected light reflected by the third reflector on its imaging plane to form left-and-right-alternating images;
S4, processing the image signals formed by the single image sensor to form stereo image signals while outputting control signals for said two liquid crystal optical valves.

Advantageously, in the step S1, lateral distance between the two groups of optical imaging lenses ranges from 40mm to 100mm.

Advantageously, the third reflector is a reflector having two sides arranged with a certain angle.

Advantageously, the single image sensor is a CCD/CMOS image sensor.

Advantageously, in the step S4, the control signals for said two liquid crystal optical valves are control signals of frame synchronization or field synchronization

The stereo imaging apparatus and method provided according to the present invention when implementing can obtain the image in which the left and the right images in respective light paths being output sequentially by using a single image sensor and two liquid crystal optical valves simultaneously driven by an image process circuit, then different forms of stereo image video signals will be obtained through the processing of the image process circuit. Compared to the existing technology, the image presented in the present invention has advantages such as no delay between the left and right images (namely good synchronization performance), variations format of screen video, high uniformity of screen quality, so that technical problem of blurred image presented in the existing technology are solved, and consistency of electronically performance and synchronization of the image are guaranteed.

### DETAILED DESCRIPTION OF THE PREFERRED EMBODIMENT

These and other advantage, aspect and novel features of the present invention, as well as details of an illustrated embodiment thereof, will be more fully understand from the following description and drawings. While various embodiments of the present invention has been presented by way of example only, and not limitation.

So as to further explain the invention, an exemplary embodiment of the present invention will be described with reference to the below drawings.

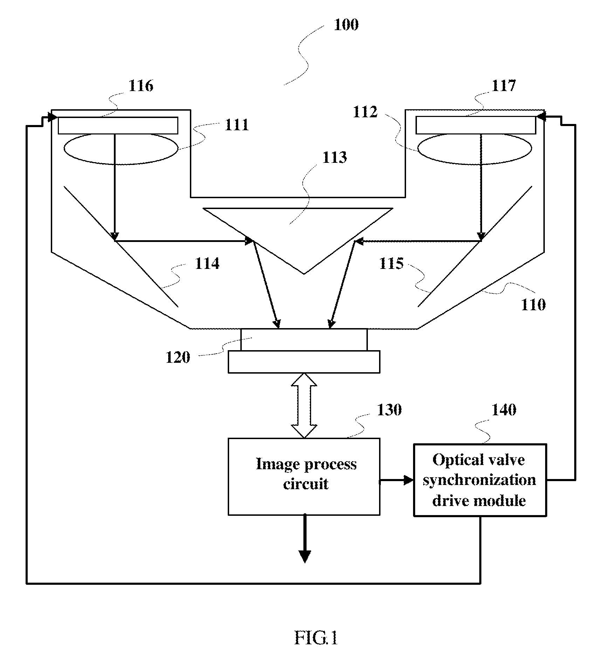

FIG.1 is a block diagram illustrating a stereo imaging apparatus in accordance with a preferred embodiment of the invention. Referring to FIG.1, the stereo imaging apparatus 100 comprises optical imaging elements 110, a single image sensor 120, an image process circuit 130 and an optical valve synchronization drive module 140.

The optical imaging elements 110 further comprises a first group of optical imaging lenses 111, a second group of optical imaging lenses 112, a first plane reflector 114, a second plane reflector 115, a third reflector 113, a first liquid crystal optical valve 116 and a second liquid crystal optical valve 117.

The first group of optical imaging lenses 111 and the second group of optical imaging lenses 112 are operable to simulate eyes to receive outside light. The lateral distance between the first group of optical imaging lenses 111 and the second group of optical imaging lenses 112 is in the range from 40mm to 100mm, which is the same as the pupillary distance of eyes, so as to ensure the precision of the structure upon installation. The first liquid crystal optical valve 116 is located on the top of the first group of optical imaging lenses 111 and the second liquid crystal optical valve 117 is located on the top of the second group of optical imaging lenses 112. The first and the second liquid crystal optical valves 116 and 117 are controlled to be open and closed in turns between left and right by the optical valve synchronization drive module 140. The first plane reflector 114 and the second plane reflector 115 are operable to reflect the light from the first and the second groups of optical imaging lenses 111 and 112 respectively, and the third reflector 113 placed in the middle of the first plane reflector 114 and the second plane reflector 115 is operable to again reflect the light by reflected the first and the second plane reflectors 114 and 115. The third reflector 113 can be a reflector having two sides arranged with a certain angle or a reflector having dual reflecting planes with other stereoscopic shapes. The single image sensor 120 may be a CCD/CMOS image sensor, the imaging plane of which may receive the reflected light reflected by the third reflector to form two alternating images. The imaging plane of the single image sensor 120 receives two complete left-and-right-alternating images. The image process circuit 130 is able to obtain the left-and-right-alternating image signals from the image sensor 120 simultaneously and output the optical valve synchronization driving signal which is frame or field synchronous to the optical valve synchronization drive module 140, so as to control two liquid crystal optical valves to be closed and open in turns between left and right. The best displaying recovery technology is to use a video signal with its odd and even field alternating in the left and right orders, namely odd field - left image, even field - right image or otherwise. And a stereo-glasses TV can be used to reproduce the scene in truth. At the same time, encoding technologies for the stereo images can be used to encode and compress the video for recording and storing.

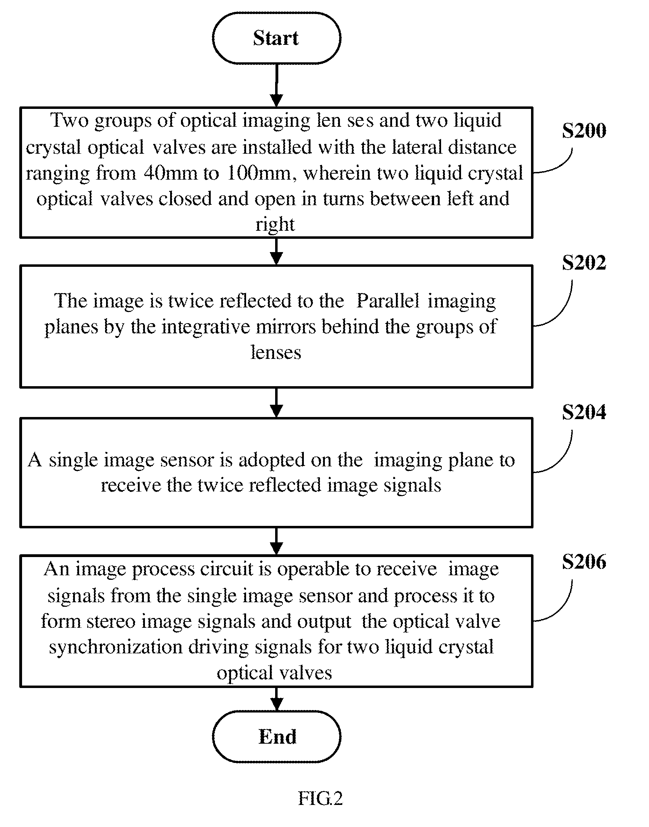

FIG.2 is a flow chart illustrating a stereo imaging method in accordance with a preferred embodiment of the invention. Referring to FIG.2, the method comprises following steps.

In the step S200, two groups of optical imaging lenses and two liquid crystal optical valves are installed with the lateral distance ranging from 40mm to 100mm to simulate eyes to receive outside light, wherein two liquid crystal optical valves are closed and open in turns between left and right.

In the step S202, two plane reflectors behind the two groups of optical imaging lenses are operable to reflect the light from two groups of optical imaging lenses respectively, and a stereo reflector placed between the two plane reflectors is operable to reflect the light reflected by the plane reflectors. Thus, the two images may be twice reflected to an imaging plane.

In the step S204, a single image sensor is adopted on the above-mentioned imaging plane to receive two twice reflected left-and-right-alternating images.

In the step S206, an image process circuit is operable to receive two left- and-right-alternating images from the single image sensor and output the optical valve synchronization driving signals which is frame or field synchronous to control two liquid crystal optical valves to be closed and open in turns between left and right. As a result, the video signal in which the left and the right images being output sequentially can be acquired. At the same time, encoding technologies can be used to encode and compress the video for recording and storing.

The above introduction and description are only in form of preferred embodiments of the invention, but not limitations of the invention. It will be appreciated that some modifications, equivalents and improvements made without departing from the spirit and principles of the present invention should fall within the scope of the present invention.

## Claims

1. A stereo imaging apparatus, wherein, comprising:
a first group of optical imaging lenses (111) and a second group of optical imaging lenses (112), operable to simulate eyes to receive outside light respectively;
a first liquid crystal optical valve (116) located on the top of the first group of optical imaging lenses (111) and a second liquid crystal optical valve (117) located on the top of the second group of optical imaging lenses (112);
an optical valve synchronization drive module (140) operable to control the first liquid crystal optical valve (116) and the second liquid crystal optical valve (117) to be open and closed in turns between left and right;
a first plane reflector (114), a second plane reflector (115) and a third reflector (113), the first plane reflector (114) and the second plane reflector (115) are operable conduct a first reflection of the light from the first group of optical imaging lenses (111) and the second group of optical imaging lenses (112), the third reflector (113) is located between the first plane reflector (114) and the second plane reflector (115) and is operable to conduct a second reflection of the light from the first reflection;
a single image sensor (120) operable to receive the light from the second reflection on its imaging plane and to form images;
an image process circuit (130) coupled to the optical valve synchronization drive module, operable to control the optical valve synchronization drive module, as well as receive image signals from the image sensor and process the received image signals to form stereo image signals.

2. The stereo imaging apparatus of claim 1, wherein lateral distance between the first group of optical imaging lenses (111) and the second group of optical imaging lenses (112) ranges from 40mm to 100mm.

3. The stereo imaging apparatus of claim 1, wherein the third reflector (113) is a reflector having two sides arranged with a certain angle.

4. The stereo imaging apparatus of claim 1, wherein the single image sensor (120) is a CCD/CMOS image sensor.

5. The stereo imaging apparatus of claim 1, wherein the image process circuit (130) is operable to control the optical valve synchronization drive module (140) to drive the first liquid crystal optical valve (116) and the second liquid crystal optical valve (117) to be closed and open in turns between left and right in a way of frame synchronization or field synchronization.

6. A stereo imaging method, the method comprising:
S1, installing two groups of optical imaging lenses (111, 112) and two liquid crystal optical valves (116, 117) laterally and parallelly to simulate eyes to receive outside light, wherein the two liquid crystal valves are closed and open in turns between left and right;
S2, reflecting the outside light received by two groups of optical imaging lenses(111, 112) through two plane reflectors (114, 115), and reflecting the light reflected by two plane reflectors (114, 115) through a third reflector (113)placed in between the two plane reflectors (114, 115);
S3, utilizing a single image sensor (120) to receive the reflected light reflected by the third reflector on its imaging plane to form left-and-right-alternating images;
S4, processing the image signals formed by the single image sensor (120) to form stereo image signals while outputting control signals for said two liquid crystal optical valves.

7. The stereo imaging method of claim 6, wherein, in the step S1, lateral distance between the two groups of optical imaging lenses ranges from 40mm to 100mm.

8. The stereo imaging method of claim 6, wherein the third reflector (113) is a reflector having two sides arranged with a certain angle.

9. The stereo imaging method of claim 6, wherein the single image sensor (120) is a CCD/CMOS image sensor.

10. The stereo imaging method of claim 6, wherein in the step S4, the control signals for said two liquid crystal optical valves (116, 117) are control signals of frame synchronization or field synchronization.
